Europäisches Patentamt

European Patent Office

Office européen des brevets

(11) Publication number: **0 479 386 A1**

# EUROPEAN PATENT APPLICATION

(21) Application number: **91202572.3**

(22) Date of filing: **02.10.91**

(51) Int. Cl.5: **F16L 55/165, B29C 63/34**

(30) Priority: **03.10.90 NL 9002151**

(43) Date of publication of application:
**08.04.92 Bulletin 92/15**

(84) Designated Contracting States:
**AT BE CH DE DK ES FR GB GR IT LI LU NL SE**

(71) Applicant: **Wegenbouwmaatschappij J. Heijmans B.V.**
**Graafsebaan 13**
**NL-5248 JR Rosmalen(NL)**

(72) Inventor: **Van Bochove, Gerrit Gijsbertus**
**Bonegraafseweg 37**
**NL-4051 CG Ochten(NL)**

(74) Representative: **de Bruijn, Leendert C. et al**
**Nederlandsch Octrooibureau**
**Scheveningseweg 82 P.O. Box 29720**
**NL-2502 LS 's-Gravenhage(NL)**

(54) Method for lining an elongated hollow space such as a sewer pipe, and lining hose and auxiliary hose for carrying out the method.

(57) In a method for lining an elongated hollow space such as a sewer pipe (1), a supple lining hose (4) is inserted into the pipe (1) and is pressed against the interior of the pipe (1). Subsequently, the hose (4) is brought to a form-retaining state through the hardening of an initially fluid, hardenable agent. An improved lining is obtained by applying a lining hose (4) which has relatively rigid (13) and relatively supple parts, which relatively rigid parts enclose seams (17) in which the hardenable agent (18) is applied, in such a way that after hardening of said agent said relatively rigid parts (13) with the hardened agent (18) between them form a form-retaining lining. Preferably, the hardenable agent (18) is applied by means of an auxiliary hose (7) on which the hardenable agent (18) is situated, which auxiliary hose (7) is pressed by means of a pressure difference against relatively rigid form-retaining elements (13) in such a way that a carrier layer (4) which carries said elements (13) is pressed against the pipe and the hardenable agent (8) is simultaneously pressed into the seams (17) between the elements.

Fig-5

EP 0 479 386 A1

The invention relates to a method for lining an elongated hollow space such as a sewer pipe, in which a supple lining hose is inserted into the pipe, is pressed against the interior of the pipe, and is then brought to a form-retaining state through the hardening of an initially fluid, hardenable agent.

Such a method is known from Dutch Patent 174,531. The lining hose used in this case comprises a layer of felt material accommodated between an inner and outer membrane of relatively liquid-tight material. After the known lining hose has been placed in the pipe, a resin with which the layer of felt material is impregnated is hardened, as a result of which a free-standing lining of a felt-reinforced resin layer is obtained.

A number of disadvantages are associated with this known method. The first disadvantage which can be mentioned is that, in order to obtain a form-retaining lining when the resin hardens, a layer of material which can readily be impregnated with resin must be used. In practice, this means that felt has to be used.

A large part - for example 90% - of the layer of material such as felt to be impregnated is made up of hollow spaces. These spaces have to be filled up completely with resin, which is relatively expensive. First of all, the resin itself is quite an expensive product. Then, in order to obtain good results from the impregnation, the resin must be free-flowing. This means that relatively cheap fillers must not be added to it. This again means that the strength of the lining obtained is largely determined by the strength of the hardened resin itself. There is no question of increasing the strength by adding fillers.

The object of the invention is therefore to provide a method of the above-mentioned type which does not have these disadvantages. This is achieved through the fact that the supple lining hose has relatively rigid and relatively supple parts, which relatively rigid parts enclose seams in which the hardenable agent is applied, in such a way that after hardening of said agent said relatively rigid parts with the hardened agent between them form a form-retaining lining.

The lining hose can be made in different ways. According to a preferred embodiment, the hardenable agent is applied between form-retaining elements situated on the inside of a supple hose-shaped carrier layer. The form-retaining lining thus obtained has excellent strength properties, which are determined by the hardened agent, the form-retaining elements, and the adhesion between them.

The method according to the invention has the advantage that the fluid, hardenable agent can be applied after the supple hose-shaped carrier layer with the form-retaining elements is placed in the pipe. The insertion and positioning of the carrier layer is thereby not influenced as regards time by the hardening time of the agent.

The application of the hardenable agent can be carried out in various ways. However, the hardenable agent is preferably applied by means of an auxiliary hose on which the hardenable agent is situated, which auxiliary hose is pressed by means of a pressure difference against the form-retaining elements in such a way that the carrier layer is pressed against the pipe and the hardenable agent is simultaneously pressed into the seams between the elements. Only the auxiliary hose comes into contact with the pressure medium, as a result of which the seams between the form-retaining elements cannot become polluted. The hardenable agent can thus be pressed in a reliable manner into the seams, which is important for ensuring good mechanical behaviour of the final lining.

According to a second preferred method, provision is made for the hardenable agent to be in the inside of the auxiliary hose, the auxiliary hose is turned inside out at one end, and is pressed into the pipe so that it is turned to an increasing extent inside out, in such a way that the auxiliary hose is pressed against the form-retaining elements and at the same time the agent situated on the auxiliary hose is pressed into the seams between the form-retaining elements.

In order to ensure that, even in the case of narrow pipes with a tapering bottom, when the auxiliary hose is pressed in the lining hose is distributed properly over the wall and does not remain jammed in the tapering section, the carrier layer is preferably inflated before the auxiliary hose is pressed into it.

The carrier layer is thus already situated in the final position when the auxiliary hose is subsequently pressed in.

The end of the supple lining layer lying opposite the end where the auxiliary hose is pressed in is in this case shut off with a pressure release valve. When the auxiliary hose is pressed in further the gas situated in the lining hose can escape at a constant pressure through the pressure release valve, so that the inflated state of the lining hose can be retained until the auxiliary hose is placed fully in the interior of the lining hose.

After the agent has hardened the auxiliary hose is preferably removed. This can be carried out by, for example, turning the auxiliary hose inside out at one end and thus stripping it further and further from the inside of the lining layer which has formed.

In connection with the placing of the auxiliary hose in the lining hose by turning it inside out, it is possible according to a first possibility to fix the end of the auxiliary hose which has been turned inside out to a ring which is itself fixed to the distended end of the lining hose. The auxiliary hose can then be pressed in.

According to a second possibility, the end of the auxiliary hose which has been turned inside out can be connected to the outlet aperture of a pressure tank. The inside out front of the auxiliary hose can then be fed into the lining hose in the known manner.

The hardenable agent is preferably a resin into which a filler is mixed. It is no problem here that the mixture of resin and filler is viscous, since this mixture can be pressed reliably by the auxiliary hose into the seams. The advantage of the use of a mixture made of resin and a filler is that a lining with excellent strength properties can be obtained with it. The strength of the hardened resin can in fact be influenced by selecting the correct filler. Moreover, the quantity of expensive resin can remain limited through the addition of a cheap filler.

The invention also relates to a lining hose for use with the method according to the invention. It can be provided with a carrier layer of supple material to which the form-retaining elements are bonded. Such a lining hose can be prefabricated very well. For the form-retaining elements a material with suitable strength properties can be selected.

The dimensions of the form-retaining elements and the seams are preferably selected in such a way that in the finished lining the form-retaining elements take up 60 - 80% of the volume of the lining. This means that only 40 - 20% of the finished lining need be made of resin or resin with a filler. Compared with the known lining, in which the resin component is about 90%, this constitutes a considerable cost saving. Again, if a filled resin is used, the proportion of resin in the overall lining can fall to as low as 10%. As already mentioned, a further improvement in strength can be obtained thereby.

According to a preferred embodiment of the lining hose, the carrier layer is made of felt which is provided with a liquid-tight layer on the outside. Said layer prevents the penetration of moisture into the seams. Any air pockets which have remained behind therein on penetration of the resin into the seams can now escape through the porous felt layer, as a result of which a reliable filling of all seams is ensured. If a filler is mixed into the resin, the mixture of resin and filler will not penetrate itself into the felt layer.

Another improvement of the strength properties of the finished lining can be ensured if the elements are elongated and overlap each other in rows.

The lining hose described so far constitutes only one possible embodiment. As an alternative, it is, for example, possible to select for it a pipe of relatively supple material which has a profile through which relatively rigid parts are formed.

The profile can be obtained by making the pipe with thicker and thinner wall parts. The relatively rigid parts are, however, preferably protuberances which are pressed into the pipe wall and project into the interior of the pipe.

Finally, the invention relates to an auxiliary hose for use with the method according to the invention, comprising an essentially impervious plastic on which a layer of the fluid and hardenable agent is provided. Said agent can be applied in the factory, for example some time beforehand, or can be applied to the auxiliary hose directly before use.

The invention will be explained in greater detail with reference to an example of an embodiment shown in the figures.

Figure 1 shows the insertion of the lining hose in a sewer pipe.

Figure 2 shows the pressing of the auxiliary hose into the lining hose.

Figure 3 shows the removal of the auxiliary hose.

Figure 4 shows the pressing of the auxiliary hose into an inflated lining hose.

Figure 5 shows a view in perspective and a cross-section of a lining hose with form-retaining elements.

Figure 6 shows a cross-section of the lining made according to the invention.

Figure 7 shows a detail of the lining hose and auxiliary hose.

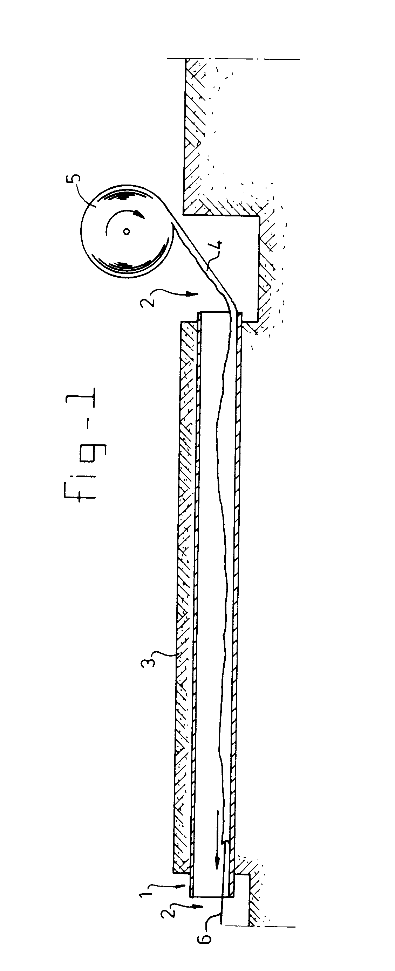

Figure 1 shows a sewer pipe 1 for repair, provided with pits 2 at regular intervals. The pipe is situated at a certain distance below street level 3.

In the method according to the invention a lining hose 4 is first pulled into the sewer pipe 1. The lining hose 4 is, for example, rolled up on a reel 5, which is supported by means which are not shown near a pit 2. The lining hose 4 can be pulled into the sewer pipe 1 by a pulling cable 6.

As soon as the lining hose 4 is in place, the application of the resin can begin. As shown in Figure 2, an auxiliary hose 7 is preferably used for this purpose. Said auxiliary hose 7 is wound on a reel 8 which is situated in a pressure chamber 9. The auxiliary hose is lined with a layer of resin 10 to which a filler may be added.

The front end 11 of the auxiliary hose is fixed in a gastight manner to the discharge aperture 12 of the pressure tank 9. The auxiliary hose 7 is pressed outwards by applying an excess pressure in the pressure tank 9 and by controlled unreeling thereof from the reel 8 in the pressure tank, in the course of which it is turned increasingly inside out. Due to the turning inside out, the resin 10 in the inside of the auxiliary hose goes onto the outside of the auxiliary hose 7. The hose is increasingly unreeled from reel 8 in the process. The auxiliary hose 7 is then conveyed into the distended end of the lining hose 4. Due to the turning inside out, the resin 10 in the inside of the auxiliary hose goes onto the outside of the auxiliary hose 7. The resin is pressed against the lining hose 4 in the process. In the example of an embodiment shown in Figure 2 the resin in the process is pressed into the seams between the form-retaining elements 13.

When the lining hose is pressed fully against the pipe by the auxiliary hose 7, steam, for example, can be conveyed in a known manner through the auxiliary hose in order to promote the hardening of the resin.

After the resin is fully hardened, the auxiliary hose can be removed, as shown in Figure 3. A cable 14, which is also wound on the reel 8, is used for this. As an alternative, the auxiliary hose 7 can, of course, also remain behind in the finished lining.

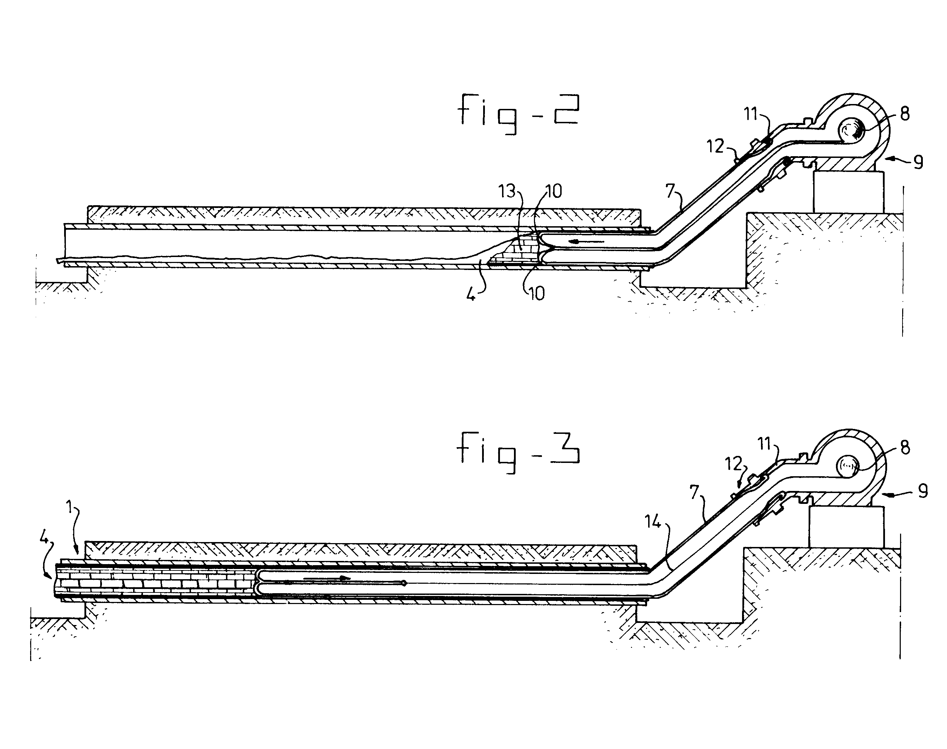

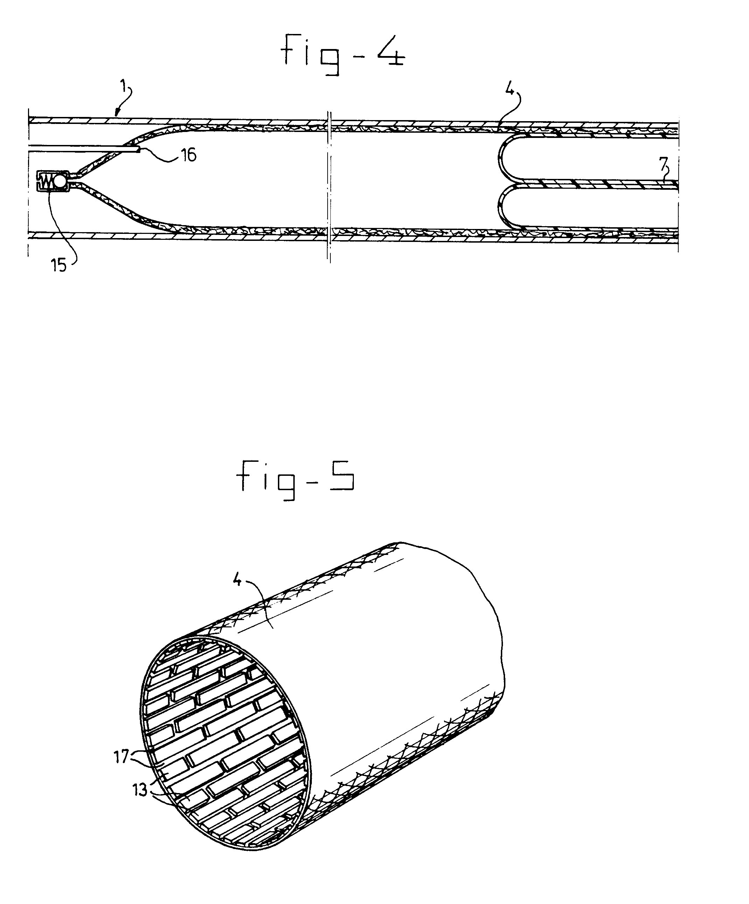

In the variant shown in Figure 4 the lining hose 4 is sealed off at one end by means of a pressure release valve 15. A gas supply pipe 16 is also provided at that end. The auxiliary hose 7 is pressed in at the end lying opposite the pressure release valve 15. As soon as the first part of the auxiliary hose 7 is placed in the lining hose 4, the lining layer 4 is inflated through the pipe 16. It consequently comes to rest in its final position against the inside of the sewer pipe 1.

On pressing in of the auxiliary hose 7 to an increasing extent the gas is compressed in the lining hose 4. From a certain pressure onwards this gas can escape through the pressure release valve 15. This variant is particularly useful for lining narrow pipes with a tapering underside. The prior inflation of the auxiliary hose then results in said hose coming to rest perfectly against the entire inside of the pipe cross-section. In the case of such narrow pipes direct pressing of the auxiliary hose into an uninflated lining layer could lead to the lining hose becoming jammed in the bottom part of the pipe, as a result of which the top part of the pipe cross-section would not be properly lined.

Figure 5 shows in perspective the preferred embodiment of the lining hose 4 according to the invention. It is lined with form-retaining objects 13 in the form of blocks. Said blocks enclose seams 17 between them.

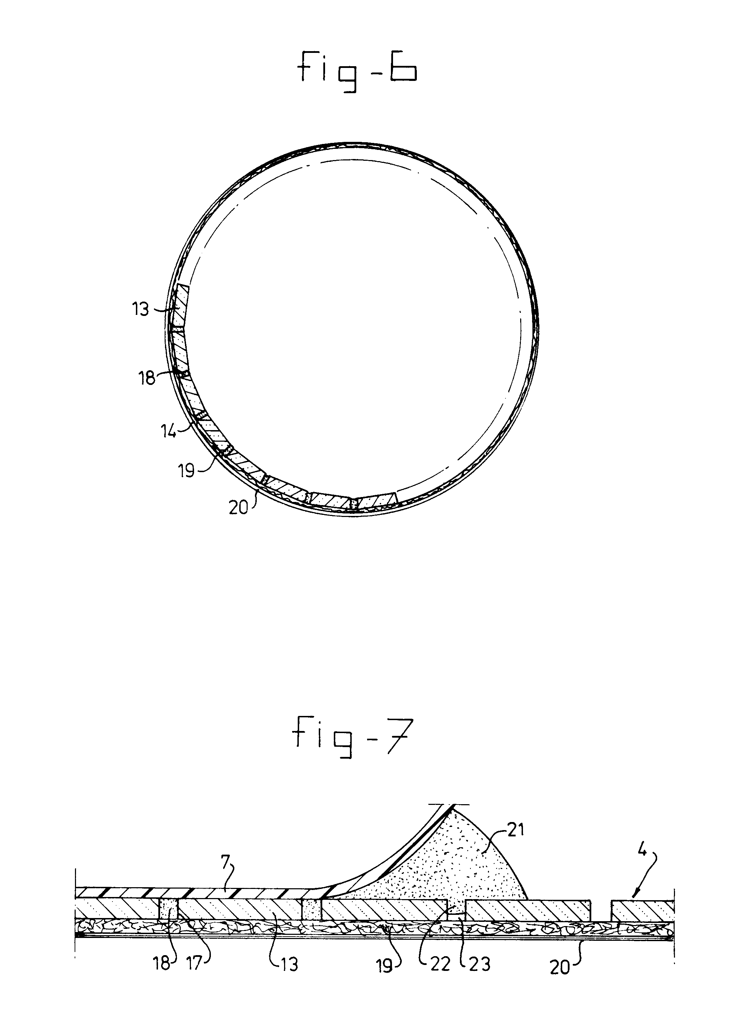

Figure 6 shows the cross-section of a lining made with such a lining hose. The resin 18 is now pressed into the seams 17 between the blocks 13. It can also be seen that the blocks 13 are placed on a supple carrier layer 19 which is preferably made of felt. Finally, the supple carrier layer is protected on the outside by means of a layer 20. The purpose of said layer 20 is to protect the lining hose from the penetration of moisture, and from mechanical stresses when it is being pulled through the sewer pipe.

Figure 7 shows a further detail of the placing of the resin 18 in the seams 17. During the pressing of the auxiliary hose 7 into the lining hose 4 a certain quantity of resin 21 forms in the lower part of the lining hose 4 and is pushed along by the auxiliary hose 7. This quantity of resin 21 initially penetrates into the seams 17, in the course of which air pockets 23 can form. Since the supple carrier layer is preferably made of felt, these air pockets can easily escape through the cavities in the felt layer 19 to the following seam 17. The resin 18 can consequently be pressed reliably into the seams 17, in such a way that they also really become fully filled.

## Claims

1. Method for lining an elongated hollow space such as a sewer pipe, in which a supple lining hose is inserted into the pipe, is pressed against the interior of the pipe, and is then brought to a form-retaining state through the hardening of an initially fluid, hardenable agent, characterised in that the lining hose has relatively rigid and relatively supple parts, which relatively rigid parts enclose seams in which the hardenable agent is applied, in such a way that after hardening of said agent said relatively rigid parts with the hardened agent between them form a form-retaining lining.

2. Method according to Claim 1, in which the hardenable agent is applied between form-retaining elements situated on the inside of a supple hose-shaped carrier layer.

3. Method according to Claim 1 or 2, in which the fluid, hardenable agent is applied after the supple hose-shaped carrier layer with the form-retaining elements is placed in the pipe.

4. Method according to Claim 3, in which the hardenable agent is applied by means of an auxiliary hose on which the hardenable agent is situated, which auxiliary hose is pressed by means of a pressure difference against the form-retaining elements in such a way that the carrier layer is pressed against the pipe and the hardenable agent is simultaneously pressed into the seams between the elements.

5. Method according to Claim 4, in which the hardenable agent is in the inside of the auxiliary hose, the auxiliary hose is turned inside out at one end, and is pressed into the pipe,

so that it is turned further inside out, in such a way that the auxiliary hose is pressed against the form-retaining elements and at the same time the agent situated on the auxiliary hose is pressed into the seams between the form-retaining elements.

6. Method according to Claim 4 or 5, in which the lining hose is inflated before the auxiliary hose is pressed into it.

7. Method according to Claim 6, in which the end of the supple lining hose lying opposite the end where the auxiliary hose is pressed in is shut off with a pressure release valve.

8. Method according to Claim 4, 5, 6 or 7, in which the auxiliary hose is removed after the agent hardens.

9. Method according to any of Claims 4 to 8, in which the end of the auxiliary hose which has been turned inside out is fixed to a ring which is itself fixed in the distended end of the lining hose.

10. Method according to any of Claims 4 to 8, in which the end of the auxiliary hose which has been turned inside out is connected to the outlet aperture of a pressure tank.

11. Method according to any of Claims 1 to 10, in which the hardenable agent is a resin into which a filler is mixed.

12. Lining hose for use with the method according to any of the preceding claims, comprising relatively supple and relatively rigid parts, which relatively rigid parts enclose seams.

13. Lining hose according to Claim 12, in which a carrier layer of supple material is provided, to which the form-retaining elements are bonded.

14. Lining hose according to Claim 13, in which the form-retaining elements and the seams are of such dimensions that in the finished lining the form-retaining elements take up 60 - 80% of the volume of the lining.

15. Lining hose according to Claim 13 or 14, in which the carrier layer is of felt and has a liquid-tight layer on the outside.

16. Lining hose according to Claim 13, 14 or 15, in which the elements are situated in the inside thereof.

17. Lining hose according to Claim 13, 14, 15 or 16, in which the elements are elongated and overlap each other in rows.

18. Lining hose according to Claim 12, in which a pipe is provided with relatively supple material, which pipe has a profile through which relatively rigid parts are formed.

19. Lining hose according to Claim 18, in which the relatively rigid parts comprise protuberances which are pressed into the pipe wall and project into the interior of the pipe.

20. Lining hose according to Claim 18, in which the protuberances are block-shaped.

21. Auxiliary hose for use with the method according to one or more of Claims 6 to 11 in conjunction with Claim 4, comprising an essentially impervious plastic on which a layer of the fluid and hardenable agent is provided.

22. Auxiliary hose for use in carrying out the method according to one or more of Claims 6 to 11 in conjunction with Claim 5, comprising an essentially impervious plastic, on the inner surface of which hose a layer of the fluid and hardenable agent is provided.

fig-1

EP 0 479 386 A1

Fig-2

Fig-3

# Fig-4

# Fig-5

Fig-6

Fig-7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 127 125 (EDGEALPHA LTD)<br>* page 1, right column, line 106 - line 126; figures 1,3,4 * * | 1,2,12,16, 18-20 | F 16 L 55/165<br>B 29 C 63/34 |
| A | DE-A-3 520 696 (H.MÜLLER)<br>* page 7, line 8 - line 24 *<br>* page 8, line 18 - line 30; figures 1,2 * * | 1,3-11, 15,21,22 | |
| A | EP-A-0 349 678 (KONINKLIJKE WEGENBOUW STEVIN B.V.)<br>* column 3, line 4 - line 29; figure 3 * * | 1 | |
| A | PATENT ABSTRACTS OF JAPAN vol. 8, no. 54 (M-282)(1491) 10 March 1984<br>& JP-A-58 208 014 ( NIHON KANKEN KOGYO K.K. ) 3 December 1983<br>* the whole document * * | 6,9 | |
| A | WO-A-9 002 851 (RUSWROE LTD)<br>* claim 15; figure 6 * * | 1 | |

TECHNICAL FIELDS
SEARCHED (Int. Cl.5)

F 16 L
B 29 C

The present search report has been drawn up for all claims

| Place of search | Date of completion of search | Examiner |
|---|---|---|
| The Hague | 10 December 91 | TOPALIDIS A. |